# EUROPEAN PATENT SPECIFICATION

(11) **EP 3 112 410 B1**
(45) Date of publication and mention of the grant of the patent: **13.09.2023**
(21) Application number: 15756081.4
(22) Date of filing: 26.02.2015
(51) Int. Cl.: C08L 9/02, C08K 5/098, C08K 5/14

(54) **CROSS-LINKABLE NITRILE RUBBER COMPOSITION AND CROSS-LINKED RUBBER PRODUCT**
VERNETZBARE NITRILKAUTSCHUKZUSAMMENSETZUNG UND VERNETZTES KAUTSCHUKPRODUKT
COMPOSITION DE CAOUTCHOUC NITRILE POUVANT ÊTRE RÉTICULÉE ET PRODUIT DE CAOUTCHOUC RÉTICULÉ

(30) Priority: 27.02.2014 JP 2014036624
(43) Date of publication of application: 04.01.2017
(73) Proprietor: Zeon Corporation, Tokyo 100-8246 (JP)
(72) Inventor: NAKASHIMA, Tomonori, Tokyo 100-8246 (JP); INOUE, Sayaka, Tokyo 100-8246 (JP)
(74) Representative: Beckmann, Claus
(86) International application number: PCT/JP2015/055545
(87) International publication number: WO 2015/129789

(56) References cited:
- EP-A1- 0 972 797
- WO-A1-2013/015373
- WO-A1-2014/115806
- JP-A- 2011 052 035
- JP-A- 2013 503 226
- US-A1- 2013 029 069
- PARG R ET AL: "Therban advanced technology: The new low molecular weight HNBR", KGK KAUTSCHUK GUMMI KUNSTSTOFFE, vol. 58, no. 3, March 2005 (2005-03), pages 109-114, XP002773440,
- DATABASE COMPENDEX [Online] ENGINEERING INFORMATION, INC., NEW YORK, NY, US; March 2005 (2005-03), PARG R ET AL: "Therban advanced technology: The new low molecular weight HNBR", Database accession no. E2005139016587 & PARG R ET AL: "Therban advanced technology: The new low molecular weight HNBR", KGK KAUTSCHUK GUMMI KUNSTSTOFFE MARCH 2005 HUTHIG GMBH DE, vol. 58, no. 3, March 2005 (2005-03), pages 109-114,

## Description

### TECHNICAL FIELD

The present invention relates to a cross-linkable nitrile rubber composition excellent in scorch stability and able to give a cross-linked rubber excellent in normal physical properties and bending fatigue resistance and to a cross-linked rubber obtained using the cross-linkable nitrile rubber composition.

### BACKGROUND ART

In the past, a nitrile rubber (acrylonitrile-butadiene copolymer rubber) has been used as a material for rubber parts for automobile use such as hoses, belts, and tubes by making use of its oil resistance, mechanical properties, chemical resistance, etc. Further, a highly saturated nitrile rubber obtained by saturation of carbon-carbon double bonds in the polymer main chain of nitrile rubber by hydrogenation etc. is further excellent in heat resistance and is being used for rubber parts such as seals, belts, hoses, and diaphragms.

In view of such a situation, Patent Document 1 proposes a rubber composition comprising 100 parts by weight of a nitrile group-containing copolymer rubber with an iodine value of 20 or less and an α,β-ethylenically unsaturated nitrile monomer unit content of 40 to 60 wt% and to 100 parts by weight of an α,β-ethylenically unsaturated carboxylic acid metal salt mixed in. Due to the composition, a cross-linked rubber excellent in oil resistance such as degraded oil resistance is obtained.

However, according to the art described in the above Patent Document 1, while it is possible to obtain cross-linked rubber excellent in degraded oil resistance, the advanced mechanical properties as a rubber composition such as the scorch stability and bending fatigue resistance are not necessarily sufficient. For this reason, improvement in advanced mechanical properties such as the scorch stability and bending fatigue resistance has been sought.
EP 0 972 797 A1 describes a crosslinkable rubber composition comprising a nitrile-containing highly saturated copolymer rubber, a metal salt of an α,β-ethylenically unsaturated carboxylic acid, and an organic peroxide, wherein the nitrile-containing highly saturated copolymer rubber is characterized by having been treated by applying a high shearing force thereto in the presence of an antioxidant so as to reduce its Mooney viscosity by 15 points or greater, by having a Mooney viscosity of 5 to 135 and a molecular weight distribution (Mw/Mn) of 3.0 to 5.0, and by showing a Mooney viscosity increase of 10 points or less when it is allowed to stand at room temperature for 30 days after the reduction of its Mooney viscosity. Rubber materials (e.g., belts, rolls and hoses) obtained by crosslinking this composition are said to have improved strength properties.
Parg et al. (KGK KAUTSCHUK GUMMI KUNSTSTOFFE, vol. 58, no. 3, pages 109-114) describe "Therban" as a new low molecular weight HNBR.
WO 2013/015373 A1 describes a nitrile-group-containing highly saturated copolymer rubber composition comprising: a nitrile-group-containing highly saturated copolymer rubber (A) having a Mooney viscosity [ML1+4,100°C] of 50-200; a nitrile-group-containing highly saturated copolymer rubber (B) having a Mooney viscosity [ML1+4,100°C] of 5-45; and short fibres (C) having an average fibre length of 0.1-12mm. The composition is said to enable the provision of a nitrile-group-containing highly saturated copolymer rubber composition which can provide crosslinked rubber having extremely high tensile strength and excellent low heat generation properties, and which has excellent workability.
US 2013/029069 A1 describes vulcanizable polymer compositions comprising a very low molecular weight optionally hydrogenated nitrile rubber, at least one cross-linking agent, optionally at least one filler and optionally one or more further auxiliary products for rubbers, a process for preparing such vulcanizable polymer compositions, furthermore a process for vulcanizing such polymer compositions and the resulting vulcanizate, preferably as a shaped article.

### PRIOR ART DOCUMENTS

### PATENT DOCUMENTS

Patent Document 1: Japanese Patent Publication No. 2003-221469A

### SUMMARY OF INVENTION

### PROBLEM TO BE SOLVED BY THE INVENTION

The present invention has as its object to provide a cross-linkable nitrile rubber composition excellent in scorch stability and able to give a cross-linked rubber excellent in normal physical properties and bending fatigue resistance and to a cross-linked rubber obtained using the cross-linkable nitrile rubber composition.

### MEANS FOR SOLVING THE PROBLEMS

The inventors engaged in intensive research for achieving the above object and as a result discovered that by using a rubber composition obtained by mixing, into a highly saturated nitrile rubber with a Mooney viscosity (ML₁₊₄, 100°C) of 50 or less and iodine value of 120 or less, an unsaturated carboxylic acid metal salt and an organic peroxide cross-linking agent, it is possible to achieve the above object.

That is, according to the present invention, there is provided the cross-linkable nitrile rubber composition defined in claim 1. This comprises a highly saturated nitrile rubber (A) with a Mooney viscosity (ML₁₊₄, 100°C) of 10 to 45 and an iodine value of 120 or less, an unsaturated carboxylic acid metal salt (B), and an organic peroxide cross-linking agent (C) as further specified in claim 1.

In the cross-linkable nitrile rubber composition of the present invention, the highly saturated nitrile rubber (A) has a branching index η2-η1 of 20,000 Pa·s or less.

In the cross-linkable nitrile rubber composition of the present invention, the highly saturated nitrile rubber (A) has a molecular weight distribution (Mw/Mn) of 1.8 to 10.

In the cross-linkable nitrile rubber composition of the present invention, preferably the unsaturated carboxylic acid metal salt (B) is a zinc salt of an unsaturated carboxylic acid, more preferably a zinc salt of an unsaturated monocarboxylic acid.

In the cross-linkable nitrile rubber composition of the present invention, preferably the unsaturated carboxylic acid metal salt (B) has a ratio of content of particles with a volume average particle size of 20 um or more of 5% or less.

Further, according to the present invention, there is provided a cross-linked rubber obtained by cross-linking any of the above cross-linkable nitrile rubber composition.

### EFFECTS OF INVENTION

According to the present invention, it is possible to provide a cross-linkable nitrile rubber composition excellent in scorch stability and able to give a cross-linked rubber excellent in normal physical properties and bending fatigue resistance and to provide a cross-linked rubber obtained using the cross-linkable nitrile rubber composition.

### DESCRIPTION OF EMBODIMENTS

### Cross-Linkable Nitrile Rubber Composition

The cross-linkable nitrile rubber composition of the present invention is a composition containing a highly saturated nitrile rubber (A) with a Mooney viscosity (ML₁₊₄, 100°C) of 10 to 45 and an iodine value of 120 or less, an unsaturated carboxylic acid metal salt (B), and an organic peroxide cross-linking agent (C).

### Highly Saturated Nitrile Rubber (A)

The highly saturated nitrile rubber (A) used in the present invention is a rubber with a Mooney viscosity (ML₁₊₄, 100°C) of 10 to 45 and an iodine value of 120 or less which is obtained by copolymerizing at least an α,β-ethylenically unsaturated nitrile monomer with another monomer able to copolymerize with the same.

The α,β-ethylenically unsaturated nitrile monomer is not particularly limited so long as an α,β-ethylenically unsaturated compound having a nitrile group. For example, acrylonitrile; an α-halogenoacrylonitrile such as α-chloroacrylonitrile and α-bromoacrylonitrile; an α-alkyl acrylonitrile such as methacrylonitrile; etc. may be mentioned. Among these as well, acrylonitrile and methacrylonitrile are preferable, while acrylonitrile is particularly preferable. The α,β-ethylenically unsaturated nitrile monomer may be a single type used alone or a plurality of types used together.

The content of an α,β-ethylenically unsaturated nitrile monomer units is preferably 10 to 60 wt% with respect to the total monomer units forming the highly saturated nitrile rubber (A), more preferably 20 to 50 wt%, still more preferably 25 to 45 wt%. If the content of the α,β-ethylenically unsaturated nitrile monomer units is too small, the obtained cross-linked rubber is liable to fall in oil resistance, while conversely if too great, the cold resistance may fall.

The monomer for copolymerizing with the α,β-ethylenically unsaturated nitrile monomer for forming the highly saturated nitrile rubber (A) used in the present invention is not particularly limited, but from the viewpoint of obtaining rubbery elasticity, a conjugated diene monomer may be preferably mentioned.

The conjugated diene monomer is not particularly limited so long as one copolymerizable with an α,β-ethylenically unsaturated nitrile monomer. 1,3-butadiene, isoprene, 2,3-dimethyl-1,3-butadiene, 1,3-pentadiene, etc. may be mentioned. Among these as well, 1,3-butadiene and isoprene are preferable, while 1,3-butadiene is particularly preferable. The conjugated diene monomer may be a single type used alone or a plurality of types used together.

The content of the conjugated diene monomer units is preferably 90 to 40 wt% with respect to the total monomer units forming the highly saturated nitrile rubber (A), more preferably 80 to 50 wt%, still more preferably 75 to 55 wt%. If the content of the conjugated diene monomer units is too small, the obtained cross-linked product is liable to fall in rubbery elasticity, while conversely if too great, the heat resistance and chemical resistance stability may be impaired.

The highly saturated nitrile rubber (A) used in the present invention may be one obtained by copolymerizing, in addition to the α,β-ethylenically unsaturated nitrile monomer and conjugated diene monomer, another monomer copolymerizable with the same. As such another monomer, a nonconjugated diene monomer, ethylene, α-olefin monomer, aromatic vinyl monomer, α,β-ethylenically unsaturated monocarboxylic acid and its esters, α,β-ethylenically unsaturated polyvalent carboxylic acid and its monoesters, polyvalent esters, and anhydrides, cross-linkable monomer, and copolymerizable antiaging agent, etc. may be mentioned.

As the nonconjugated diene monomer, one having 5 to 12 cabon atoms is preferable. For example, 1,4-pentadiene, 1,4-hexadiene, vinylnorbornene, dicyclopentadiene, etc. may be mentioned.

As the α-olefin monomer, one having 3 to 12 cabon atoms is preferable. For example, propylene, 1-butene, 4-methyl-1-pentene, 1-hexene, 1-octene, etc. may be mentioned.

As the aromatic vinyl monomer, for example, styrene, α-methylstyrene, vinylpyridine, etc. may be mentioned.

As the α,β-ethylenically unsaturated monocarboxylic acid, for example, acrylic acid, methacrylic acid, crotonic acid, cinnamic acid, etc. may be preferably mentioned.

As the α,β-ethylenically unsaturated monocarboxylic acid ester, for example, ethyl (meth)acrylate (meaning ethyl acrylate and ethyl methacrylate, same below), butyl (meth)acrylate, 2-ethylhexyl (meth)acrylate, etc. may be mentioned.

As the α,β-ethylenically unsaturated polyvalent carboxylic acid, for example, maleic acid, fumaric acid, itaconic acid, etc. may be mentioned.

As the α,β-ethylenically unsaturated polyvalent carboxylic acid monoester, for example, a maleic acid monoalkyl ester such as monomethyl maleate, monoethyl maleate, monopropyl maleate, and mono-n-butyl maleate; a fumaric acid monoalkyl ester such as monomethyl fumarate, monoethyl fumarate, monopropyl fumarate, and mono-n-butyl fumarate; a citraconic acid monoalkyl ester such as monomethyl citraconate, monoethyl citraconate, monopropyl citraconate, and mono-n-butyl citraconate; an itaconic acid monoalkyl ester such as monomethyl itaconate, monoethyl itaconate, monopropyl itaconate, and mono-n-butyl itaconate; etc. may be mentioned.

As the α,β-ethylenically unsaturated polyvalent carboxylic acid polyvalent ester, for example, dimethyl maleate, di-n-butyl maleate, dimethyl fumarate, di-n-butyl fumarate, dimethyl itaconate, di-n-butyl itaconate, etc. may be mentioned.

As the α,β-ethylenically unsaturated polyvalent carboxylic acid anhydride, for example, maleic anhydride, itaconic anhydride, etc. may be mentioned.

As the cross-linkable monomer, for example, a divinyl compound such as divinylbenzene; a di(meth)acrylic acid ester such as ethylene di(meth)acrylate, diethyleneglycol di(meth)acrylate, and ethyleneglycol di(meth)acrylate; a trimethacrylic acid ester such as trimethylolpropane tri(meth)acrylate; or other polyfunctional ethylenically unsaturated monomer and also a self-cross-linkable monomer such as N-methylol(meth)acrylamide and N,N'-dimethylol(meth)acrylamide may be mentioned.

As the copolymerizable antiaging agent, for example, N-(4- anilinophenyl)acrylamide, N-(4-anilinophenyl)methacrylamide, N-(4- anilinophenyl)cinnamamide, N-(4-anilinophenyl)crotonamide, N-phenyl-4- (3-vinyl benzyloxy)aniline, N-phenyl-4-(4-vinyl benzyloxy)aniline, etc. may be mentioned.

These copolymerizable other monomers may be used as a plurality of types together. The content of the units of the other monomer is preferably 50 wt% or less with respect to the total monomer units forming the highly saturated nitrile rubber (A), more preferably 30 wt% or less, still more preferably 10 wt% or less.

The highly saturated nitrile rubber (A) is produced by performing a high shear treatment in the presence of an antiaging agent. Otherwise, the method of production of the highly saturated nitrile rubber (A) used in the present invention is not particularly limited, and, for example, the method of copolymerizing the α,β-ethylenically unsaturated nitrile monomer, conjugated diene monomer, and optionally added other monomer copolymerizable with these to thereby obtain a copolymer (a) and adding an antiaging agent to the obtained copolymer (a) and imparting a high shear force to the obtained copolymer (a) in the presence of the antiaging agent as high shear treatment etc. may be mentioned.

As the polymerization method, any of the known emulsion polymerization method, suspension polymerization method, bulk polymerization method, and solution polymerization method can be used, but since control of the polymerization reaction is easy, the emulsion polymerization method is preferable. At the time of emulsion polymerization, ordinarily used polymerization auxiliary materials such as an emulsifier, polymerization initiator, and molecular weight adjuster may be used.

The emulsifier is not particularly limited, but, for example, a nonionic emulsifier such as a polyoxyethylene alkyl ether, polyoxyethylene alkyl phenol ether, polyoxyethylene alkyl ester, and polyoxyethylene sorbitan alkyl ester; an anionic emulsifier such as a salt of a fatty acid such as myristic acid, palmitic acid, oleic acid, and linoleic acid, an alkylbenzene sulfonate such as sodium dodecylbenzene sulfonate, a higher alcohol sulfuric acid ester salt, and an alkyl sulfosuccinate; a copolymerizable emulsifier such as a sulfo ester of an α,β-unsaturated carboxylic acid, a sulfate ester of an α,β-unsaturated carboxylic acid, and a sulfoalkylaryl ether; etc. may be mentioned. The amount of use of the emulsifier is preferably 0.1 to 10 parts by weight with respect to 100 parts by weight of the total monomers.

The polymerization initiator is not particularly limited so long as a radical initiator, but an inorganic peroxide such as potassium persulfate, sodium persulfate, ammonium persulfate, potassium perphosphate, and hydrogen peroxide; an organic peroxide such as t-butyl peroxide, cumen hydroperoxide, p-menthane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, and t-butylperoxyisobutyrate; an azo compound such as azobisisobutyronitrile, azobis-2,4-dimethylvaleronitrile, azobiscyclohexane carbonitrile, and methyl azobisisobutyrate; etc. may be mentioned. These polymerization initiators can be used alone or as two or more types combined. As the polymerization initiator, an inorganic or organic peroxide is preferable. When using a peroxide as a polymerization initiator, a reducing agent such as sodium bisulfite and ferrous sulfate may be combined with for use as a redox-type polymerization initiator. The amount of use of the polymerization initiator is preferably 0.01 to 2 parts by weight with respect to 100 parts by weight of the total monomers.

The molecular weight adjuster is not particularly limited, but a mercaptan such as t-dodecylmercaptan, n-dodecylmercaptan, and octylmercaptan; a halogenated hydrocarbon such as carbon tetrachloride, methylene chloride, and methylene bromide;α-methylstyrene dimer; a sulfur-containing compound such as tetraethylthiuram disulfide, dipentamethylenethiuram disulfide, and diisopropylxantogen disulfide; etc. may be mentioned. These may be used alone or as two or more types combined. Among these as well, mercaptans are preferable, and t-dodecylmercaptan is more preferable. The amount of use of the molecular weight adjuster is preferably 0.1 to 0.8 part by weight with respect to 100 parts by weight of the total monomers.

For the medium of the emulsion polymerization, usually water is used. The amount of water is preferably 80 to 500 parts by weight with respect to 100 parts by weight of the total monomers.

At the time of the emulsion polymerization, furthermore, if necessary, a polymerization auxiliary material such as stabilizer, dispersant, pH adjuster, deoxidant, and particle size adjuster may be used. If using these, the types and amounts of use are both not particularly limited.

Further, it is possible to make the copolymer (a) coagulate from the latex of the copolymer (a) obtained by emulsion polymerization to thereby obtain the copolymer (a).

Further, to the obtained copolymer (a), if necessary, the copolymer (a) may also be hydrogenated (hydrogenation reaction). In this case, the method of hydrogenation is not particularly limited. A known method may be employed.

The Mooney viscosity (ML₁₊₄, 100°C) of the copolymer (a) is usually 60 to 200, preferably 50 to 160.

Further, by adding an antiaging agent to the thus obtained copolymer (a) and imparting a high shear force to the copolymer (a) in the presence of the antiaging agent as high shear treatment, it is possible to make the copolymer (a) lower in Mooney viscosity and thereby obtain a highly saturated nitrile rubber (A).

The antiaging agent is not particularly limited, but, for example, an aromatic secondary amine-based, amine-ketone-based, mercaptobenzoimidazole-based, bisphenol-based, monophenol-based, thiobisphenol-based, hydroquinone-based, nickel-based, thiourea-based, thioether-based, and phosphorus-based antiaging agent can be used. Among these as well, from the viewpoint of being able to lower the Mooney viscosity well by high shear treatment, a hydroquinone-based antiaging agent is preferable.

The aromatic secondary amine-based antiaging agent is a secondary amine comprised of a nitrogen atom to which an aromatic ring is bonded. As specific examples, a diarylamine-based antiaging agent such as octylated diphenylamine, 4,4'-bis(dimethylbenzyl)diphenylamine, and phenyl-α-naphthylamine; a diaryl-p-phenylenediamine-based antiaging agent such as diphenyl-p-phenylenediamine and dinaphthyl-p-phenylenediamine; and an alkyl-aryl-p-phenylenediamine-based antiaging agent such as N-isopropyl-N'-phenyl-p-phenylenediamine, N-1,3-dimethylbutyl-N'-phenyl-p-phenylenediamine, N-(3-methacryloyloxy-2- hydroxypropyl)-N'-phenyl-p-phenylenediamine, and N-(methacryloyl)-N'-phenyl-p-phenylenediamine; etc. may be mentioned.

The amine-ketone-based antiaging agent is a condensate of an aromatic amine and ketone. As specific examples, an aniline-acetone condensate, p-phenetidine-acetone condensate, diphenylamine-acetone condensate, etc. may be mentioned.

As specific examples of the mercaptobenzoimidazole-based antiaging agent, mercaptobenzoimidazole and its zinc salt, mercaptomethylbenzoimidazole and its zinc salts etc. may be mentioned.

As specific examples of the bisphenol-based antiaging agent, bisphenol-alkanes such as 2,2'-methylenebis(4-methyl-6-t-butylphenol) and 4,4'-butylidenebis(3-methyl-6-t-butylphenol); and bisphenol-sulfides such as 4,4'-thiobis(3-methyl-6-t-butylphenol) may be mentioned.

As specific examples of the monophenol-based antiaging agent, styrenated phenol, 2,6-di-t-butyl-4-methylphenol, 2,6-di-t-butyl-4-ethylphenol, n-octadecyl-3-(3,5-di-t-butyl-4-hydroxyphenyl)propionate, 2,4-dimethyl-6-(1-methylcyclohexyl)phenol, 2-t-butyl-6-(3-t-butyl-2-hydroxy-5-methylbenzyl)-4-methylphenylacrylate, 2-[1-(2-hydro-3,5-di-t-pentylphenyl)ethyl]-4,6-di-t-pentylphenylacrylate, etc. may be mentioned.

As specific examples of the thiobisphenol-based antiaging agent, 4,4'-thiobis(3-methyl-6-t-butylphenol), 4,4'-bis(3,5-di-t-butyl-4- hydroxybenzyl)sulfide, 4,4'-thiobis(6-t-butyl-o-cresol), etc. may be mentioned.

As specific examples of the hydroquinone-based antiaging agent, 2,5-di-t-butylhydroquinone, 2,5-di-t-amylhydroquinone, poly(2,2,4-trimethyl-1,2-dihydroquinoline), etc. may be mentioned.

As specific examples of the nickel-based antiaging agent, nickel dimethyldithiocarbamate, nickel diethyldithiocarbamate, nickel dibutylthiocarbamate, nickel isopropyl xantogenate, etc. may be mentioned.

As specific examples of the thiourea-based antiaging agent, 1,3-bis(dimethylaminopropyl)thiourea, tributylthiourea, etc. may be mentioned.

As specific examples of the thioether-based antiaging agent, dilauryl-3,3-thiodipropionate, distearyl-3,3-thiodipropionate, pentaerythritoltetrakis(3-laurylthiopropionate), etc. may be mentioned.

As specific examples of the phosphorus-based antiaging agent, tris(nonylated phenyl)phosphite etc. may be mentioned.

The method of imparting a high shear force to the copolymer (a) in the presence of an antiaging agent is not particularly limited, but this can be performed by a shear velocity of preferably 500 to 5,000s⁻¹, more preferably 800 to 5,000s⁻¹, and a temperature at the time of treatment to impart a high shear force of preferably 180 to 380°C, more preferably 250 to 350°C.

As the specific method when imparting a high shear force to the copolymer (a) in the presence of an antiaging agent, for example, the method of using an extruder provided with a single or multiple screws, preferably a twin-screw extruder provided with two screws, to impart a shear force under the above shear velocity and temperature conditions is suitable. As the twin-screw extruder, a twin-screw extruder of a complete meshing type where the screws rotate in the same direction can be preferably used. Further, as the shape of the screws, from the viewpoint of imparting shear force, double-flight or more flight screws are preferable, while double-flight screws and triple-flight screws are particularly preferable.

Further, as the twin-screw extruder used when imparting a high shear force, one with an L/D (length/diameter) ratio of 30 or more is preferable, while one with the ratio of 30 to 80 is more preferable. If the L/D is too small, a cooling zone cannot be sufficiently secured. For this reason, the rubber is not sufficiently cooled at the outlet of the extruder and the rubber is not taken up well when taking it up from the extruder or, since it is extruded at a high temperature, the rubber is sometimes degraded or gelated. In particularly, by imparting a high shear force, a large heat is generated, so from this viewpoint, the rubber is preferably sufficiently cooled before being extruded from the extruder. For this reason, from such a viewpoint, the L/D is preferably made the above range and the cooling zone is preferably sufficiently secured. Note that, the rubber temperature at the outlet of the extruder is preferably 360°C or less, more preferably 330°C or less.

Further, the twin-screw extruder is usually configured from a plurality of barrels connected in series, but in the present invention, the twin-screw extruder is preferably made one comprised of a charging zone for charging the copolymer (a) and antiaging agent, a melting zone for making these melt, a kneading and shearing zone for kneading these by a high shear force, and a cooling and degassing zone for cooling and degassing.

In the charging zone and melting zone, the copolymer (a) and antiaging agent are made to melt and the antiaging agent is made to uniformly disperse in the copolymer (a). The screw configurations in the charging zone and melting zone are basically comprised of feed use transport sections and configurations for gradually compressing the materials are employed. Further, as the temperature setting as well, a setting where the melting and kneading are suitably performed is preferable. In practice, the temperature is preferably raised in several stages up to about 250°C.

In the following kneading and shearing zone, screws configured at the kneading section are used. The shear force of the screws is utilized to impart a shear force to the rubber at a predetermined high temperature. The temperature setting in the kneading and shearing zone is preferably 240 to 320°C, more preferably 250 to 300°C. By setting this temperature range, it is possible to prevent gelation of the copolymer (a) while suitably imparting a high shear force to the copolymer (a). Due to this, it is possible to impart a high shear force so as to suitably lower the Mooney viscosity.

In the following cooling and degassing zone, the kneaded material kneaded by the high shear force is cooled and moisture and volatile byproducts are removed from the degassing vent under reduced pressure. Further, finally, the kneaded material is extruded from the extrusion head. The screw configuration in the cooling and degassing zone is preferably a configuration using a small shear force feed-use transport section so that the kneaded material is sufficiently cooled. Further, the temperature setting of the cooling and degassing zone is preferably 180 to 270°C. Preferably a 700 to 750 mmHg reduced pressure state is held, but ordinary pressure is also possible.

By performing the high shear treatment imparting a high shear force to the copolymer (a) in the presence of an antiaging agent in this way, it is possible to lower the Mooney viscosity of the copolymer (a) and thereby obtain a highly saturated nitrile rubber (A).

The Mooney viscosity (polymer Mooney viscosity) (ML₁₊₄, 100°C) of the highly saturated nitrile rubber (A) is 10 to 45. If the Mooney viscosity is too high, the processability becomes inferior and the obtained cross-linked rubber ends up becoming inferior in bending fatigue resistance.

Further, the branching index η2-η1 of the highly saturated nitrile rubber (A) is 20,000 Pa·s or less, more preferably 15,000 Pa·s or less, still more preferably 12,000 Pa·s or less. Note that, the lower limit of the branching index is not particularly limited, but is usually 3,000 Pa·s or more. By making the branching index the above range, it is possible to better improve the scorch stability and bending fatigue resistance when made into cross-linked rubber. On the other hand, if the branching index is too high, the effect of improvement of the scorch stability and the bending fatigue resistance sometimes becomes smaller.

Note that, in the present invention, the method of measurement of the branching index of the highly saturated nitrile rubber (A) is not particularly limited, but it is possible to find the difference (η2-η1) between a complex viscosity (η1) at a low shear velocity side where the effect of a long chain branched structure is remarkably felt and a complex viscosity (η2) at a high shear velocity side and use this as the branching index. Specifically, a viscoelasticity measuring device is used to measure the complex viscosity (η1) at a temperature 100°C, a frequency of 1 Hz, dynamic strain of 7.0%, and shear velocity of 0.44s⁻¹ and the complex viscosity (η2) at a temperature 100°C, a frequency of 1 Hz, dynamic strain of 473.0%, and shear velocity of 29.7s⁻¹. The difference (η2-η1) of these is calculated and used as the branching index.

In the present invention, the method of making the branching index the above range is not particularly limited, but, for example, in obtaining a highly saturated nitrile rubber (A), first, the method of selecting the type or adjucting the amount of addition of the molecular weight adjuster used when the copolymer (a) is obtained by the emulsion polymerization method etc. may be mentioned. Furthermore, in imparting a high shear force to the resultant obtained copolymer (a) in the presence of an antiaging agent so as to obtain a highly saturated nitrile rubber (A), the method of adjusting the type or amount of addition of the antiaging agent in accordance with the Mooney viscosity or molecular weight distribution of the above obtained copolymer (a) or the method of adjusting the shear conditions (for example, the screw configuration of the twin-screw extruder used for imparting shear force and its roatation speed, processing speed, barrel temperature settings, etc.) may be mentioned.

Giving a general example, the higher the screw speed is made, the more the branching index can be lowered. Furthermore, the slower the processing speed is made, the more the branching index can be raised.

Above, several of these methods are preferably combined to adjust the branching index to become the above range.

Furthermore, the iodine value of the highly saturated nitrile rubber (A) is 120 or less, more preferably 60 or less, still more preferably 30 or less. If the iodine value is too high, the obtained cross-linked rubber is liable to fall in heat resistance and ozone resistance.

Further, the molecular weight distribution (Mw/Mn) of the highly saturated nitrile rubber (A) is 1.8 to 10. If Mw/Mn is too small, the obtained cross-linkable rubber composition is liable to deteriorate in kneadability. If Mw/Mn is too large, the obtained cross-linked rubber is liable to deteriorate in dynamic heat buildup resistance.

Note that, in the above, as the method for making the Mooney viscosity of the highly saturated nitrile rubber (A) the above range, the method of using treatment imparting a high shear force so as to lower the Mooney viscosity is illustrated, but the present invention is not limited to one using such a method. For example, it is also possible to employ the method of utilizing a metathesis reaction etc. to lower the molecular weight of the copolymer (a) and thereby lower the Mooney viscosity etc.

### Unsaturated Carboxylic Acid Metal Salt (B)

The unsaturated carboxylic acid metal salt (B) used in the present invention is a salt of an unsaturated carboxylic acid and a metal.

An unsaturated carboxylic acid has at least a monovalent free carboxyl group for forming a metal salt. An unsaturated monocarboxylic acid, unsaturated dicarboxylic acid unsaturated dicarboxylic acid monoester, etc. may be illustrated.

As the unsaturated monocarboxylic acid, acrylic acid, methacrylic acid, crotonic acid, 3-butenoic acid, etc. may be mentioned. As the unsaturated dicarboxylic acid, maleic acid, fumaric acid, itaconic acid, etc. may be mentioned. As the unsaturated dicarboxylic acid monoester, monomethyl maleate, monoethyl maleate, monomethyl itaconate, monoethyl itaconate, etc. may be mentioned. Among these as well, from the viewpoint of the strength characteristics of the obtained cross-linked rubber (in particular, the bending fatigue resistance), an unsaturated carboxylic acid not having an ester group is preferable, an unsaturated monocarboxylic acid is more preferable, and methacrylic acid is particularly preferable.

The metal forming the unsaturated carboxylic acid metal salt (B) is not particularly limited, but, for example, a polyvalent metal such as zinc, magnesium, calcium, barium, titanium, chromium, iron, cobalt, nickel, aluminum, tin, and lead may be mentioned as being preferable. Among these as well, from the viewpoint of the strength characteristics of the obtained cross-linked rubber (in particular, bending fatigue resistance), zinc, magnesium, calcium, and aluminum are preferable, while zinc is particularly preferable.

Note that, in the present invention, the unsaturated carboxylic acid metal salt (B) may be formed by mixing an unsaturated carboxylic acid which becomes to form the unsaturated carboxylic acid metal salt (B) and a metal or metal compound into the highly saturated nitrile rubber (A) and making the these react in the highly saturated nitrile rubber (A). By forming an unsaturated carboxylic acid metal salt (B) by such a method, it is possible to make the obtained unsaturated carboxylic acid metal salt (B) disperse well in the highly saturated nitrile rubber (A). Note that, as the metal compound used in such a case, an oxide, hydroxide, carbonate, etc. of the above-mentioned metals may be mentioned. Among these as well, zinc oxide and zinc carbonate are preferably used.

When mixing an unsaturated carboxylic acid and metal or metal compound in the highly saturated nitrile rubber (A) to form the unsaturated carboxylic acid metal salt (B), the metal or metal compound is mixed in by preferably 0.5 to 4 moles, more preferably 0.7 to 3 moles, with respect to 1 mole of the unsaturated carboxylic acid to cause the reaction. If the amount of the metal or metal compound used is either too small or too large, the reaction between the unsaturated carboxylic acid and the metal or metal compound will become difficult. However, if using zinc oxide, zinc carbonate, zinc hydroxide, etc. as a metal compound, since these even alone function as a cross-linking accelerator which is one of compounding agents of rubber, even if the upper limit of the above range is exceeded, depending on the composition of the formulation, sometimes no problem will occur.

Further, the unsaturated carboxylic acid metal salt (B) is preferably a fine size one so long as no problems occur in handling. In particular, one with a ratio of content of particles with a volume average particle size of 20 um or more of 5% or less is preferable. To make the unsaturated carboxylic acid metal salt (B) finer in this way, the method of classifying the unsaturated carboxylic acid metal salt (B) by an air classifier or screen classifier etc. may be used. Alternatively, when mixing an unsaturated carboxylic acid and metal or metal compound to form an unsaturated carboxylic acid metal salt (B) in the highly saturated nitrile rubber (A), the method of classifying the metal or metal compound by an air classifier or screen classifier etc. may be used to make the unsaturated carboxylic acid metal salt (B) finer.

In the cross-linkable nitrile rubber composition of the present invention, the content of the unsaturated carboxylic acid metal salt (B) is preferably 1 to 100 parts by weight with respect to 100 parts by weight of the highly saturated nitrile rubber (A), more preferably 1 to 50 parts by weight, still more preferably 2 to 20 parts by weight. If the content of the unsaturated carboxylic acid metal salt (B) is too small, the obtained cross-linked product will sometimes fall in strength, while conversely if too great, the cross-linked product will sometimes fall too much in elongation.

### Organic Peroxide Cross-Linking Agent (C)

The cross-linkable nitrile rubber composition of the present invention contains an organic peroxide cross-linking agent (C) in addition to the highly saturated nitrile rubber (A) and unsaturated carboxylic acid metal salt (B).

As the organic peroxide cross-linking agent (C), a conventionally known one can be used. It is not particularly limited, but dicumyl peroxide, cumen hydroperoxide, t-butylcumyl peroxide, p-menthane hydroperoxide, di-t-butyl peroxide, 1,3-bis(t-butylperoxyisopropyl)benzene, 1,4-bis(t-butylperoxyisopropyl)benzene, 1,1-di-t-butylperoxy-3,3-trimethyl cyclohexane, 4,4-bis-(t-butylperoxy)-n-butyl valerate, 2,5-dimethyl-2,5-di-t-butylperoxyhexane, 2,5-dimethyl-2,5-di-t-butylperoxyhexine-3, 1,1-di-t-butylperoxy-3,5,5-trimethyl cyclohexane, p-chlorobenzoyl peroxide, t-butylperoxyisopropyl carbonate, t-butylperoxy benzoate, etc. may be mentioned. These may be used as single types alone or as a plurality of types together.

In the cross-linkable nitrile rubber composition of the present invention, the content of the organic peroxide cross-linking agent (C) is preferably 1 to 20 parts by weight with respect to 100 parts by weight of the highly saturated nitrile rubber (A), more preferably 2 to 15 parts by weight, still more preferably 3 to 10 parts by weight. If the content of the organic peroxide cross-linking agent(C) is too small, the obtained cross-linked rubber is liable to deteriorate in mechanical properties (breakage strength etc.). On the other hand, if too great, the obtained cross-linked rubber may deteriorate in bending fatigue resistance.

Further, the cross-linkable nitrile rubber composition of the present invention may further contain a co-cross-linking agent. As the co-cross-linking agent, a low molecular weight or high molecular weight compound having a plurality of radical reactive unsaturated groups in its molecule is preferable. For example, a polyfunctional vinyl compound such as divinylbenzene and divinylnaphthalene; an iscyanurate such as triallyl isocyanurate and trimethallyl isocyanurate; a cyanurate such as triallyl cyanurate; a maleimide such as N,N'-m-phenylene dimaleimide; an allyl ester of a polyvalent acid such as diallyl phthalate, diallyl isophthalate, diallyl maleate, diallyl fumarate, diallyl sebacate, and triallyl phosphate; a diethyleneglycol bisallyl carbonate; an allyl ether such as ethyleneglycol diallyl ether, trimethylolpropane triallyl ether, and pentaerythritol partial allyl ether; an allyl-modified resin such as allyl-modified novolac and allyl-modified resol; a tri- to penta-functional methacrylate compound or acrylate compound such as trimethylolpropane trimethacrylate and trimethylolpropane triacrylate; etc. may be mentioned. Among these as well, from the viewpoint that the effect of the present invention becomes much more remarkable, an isocyanulate is preferable, while triallyl isocyanulate is particularly preferable.

The content of the co-cross-linking agent in the cross-linkable nitrile rubber composition of the present invention is preferably 1 to 20 parts by weight with respect to 100 parts by weight of the highly saturated nitrile rubber (A), more preferably 1 to 10 parts by weight, still more preferably 2 to 5 parts by weight.

Furthermore, the cross-linkable nitrile rubber composition of the present invention may have blended into it, in addition to the highly saturated nitrile rubber (A), unsaturated carboxylic acid metal salt (B), and organic peroxide cross-linking agent (C) and the optionally added co-cross-linking agent, other compounding agents which are usually used in the field of rubber processing. As such compounding agents, for example, a reinforcing agent, filler, antioxidant, photostabilizer, scorch preventer, plasticizer, processing aid, slip agent, tackifier, lubricant, flame retardant, acid acceptor, antifungal agent, antistatic agent, coloring agent, silane coupling agent, cross-linking aid, cross-linking retardant, foam agent, etc. may be mentioned. As the amounts of these compounding agents, amounts according to the purposes of inclusion may be suitably employed.

Further, the cross-linkable nitrile rubber composition of the present invention may contain rubber other than the above-mentioned highly saturated nitrile rubber (A) to the extent not impairing the effects of the present invention. As such other rubber, acryl rubber, ethylene-acrylic acid copolymer rubber, styrene-butadiene copolymer rubber, polybutadiene rubber, ethylene-propylene copolymer rubber, ethylene-propylene-diene ternary copolymer rubber, epichlorohydrin rubber, fluororubber, urethane rubber, chloroprene rubber, silicone rubber, natural rubber, polyisoprene rubber, etc. may be mentioned. When mixing in rubber other than the highly saturated nitrile rubber (A), the amount in the nitrile rubber composition is 10 parts by weight or less with respect to 100 parts by weight of the highly saturated nitrile rubber (A).

The cross-linkable nitrile rubber composition of the present invention is prepared by mixing the above ingredients in a preferably nonaqueous system. The method of preparing the cross-linkable nitrile rubber composition of the present invention is not particularly limited, but the composition usually can be prepared by mixing the ingredients other than the organic peroxide cross-linking agent (C) and other ingredients which are unstable against heat such as the co-cross-linking agent or cross-linking aid etc. by a Bambury mixer, interal mixer, kneader, or other mixing machine for primary kneading, then transferring the mixture to open rolls etc. to add organic peroxide cross-linking agent (C) and other ingredients which are unstable against heat for secondary kneading etc. Note that, the primary kneading is usually performed at 10 to 200°C, preferably 30 to 180°C in temperature, for 1 minute to 1 hour, preferably 1 minute to 30 minutes, while the secondary kneading is usually performed at 10 to 90°C, preferably 20 to 60°C in temperature, for 1 minute to 1 hour, preferably 1 minute to 30 minutes.

The thus obtained cross-linkable nitrile rubber composition of the present invention has a compound Mooney viscosity (ML₁₊₄, 100°C) of preferably 5 to 200, more preferably 10 to 150, still more preferably 20 to 100, and is excellent in processability. Furthermore, the cross-linkable nitrile rubber composition of the present invention has a long scorch time and is excellent in scorch stability.

### Cross-Linked Rubber

The cross-linked rubber of the present invention is obtained by cross-linking the above-mentioned cross-linkable nitrile rubber composition of the present invention.

The cross-linked rubber of the present invention can be produced by using the cross-linkable nitrile rubber composition of the present invention, for example, using a molding machine which corresponds to the desired shape, for example, an extruder, injection molding machine, press, rolls, etc. for molding, heating to cause a cross-linking reaction and thereby fixing the shape as a cross-linked product. In this case, it is possible to mold the rubber, then cross-link it and possible to cross-link it simultaneously with molding. The molding temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 1 hour.

Note that, depending on the shape, size, etc. of the cross-linked rubber, sometimes, even if the surface is cross-linked, the inside part is not sufficiently cross-linked, so it is possible to further heat the rubber for secondary cross-linking.

As the heating method, press heating, steam heating, oven heating, hot air heating, or another general method which is used for cross-linking rubber may be suitably selected.

The thus obtained cross-linked rubber of the present invention is obtained using the above-mentioned cross-linkable nitrile rubber composition of the present invention, so is excellent in normal physical properties and bending fatigue resistance.

For this reason, the cross-linked rubber of the present invention, taking advantage of such a characteristic, can be used for O-rings, packings, diaphragms, oil seals, shaft seals, bearing seals, well head seals, air compressor seals, seals for sealing in Freon or fluorohydrocarbons or carbon dioxide which is used for compressors for cooling devices for air conditioners or refrigerating machines of air-conditioning systems, seals for sealing in supercritical carbon dioxide or subcritical carbon dioxide which is used for the washing media in precision washing, seals for roller devices (roller bearings, automotive hub units, automotive water pumps, linear guide devices and ball screws, etc.), valves and valve seats, BOP (blow out preventers), bladders, and other various seal members; intake manifold gaskets which are attached at connecting parts of intake manifolds and cylinder heads, cylinder head gaskets which are attached at connecting parts of cylinder blocks and cylinder heads, rocker cover gaskets which are attached at connecting parts of rocker covers and cylinder heads, oil pan gaskets which are attached at connecting parts of oil pans and cylinder blocks or transmission cases, fuel cell separator use gaskets which are attached between pairs of housings straddling unit cells provided with positive electrodes, electrolyte plates, and negative electrodes, top cover use gaskets for hard disk drives, and other various types of gaskets; printing use rolls, ironmaking use rolls, papermaking use rolls, industrial use rolls, office equipment use rolls, and other various types of rolls; flat belts (film core flat belts, cord flat belts, laminated flat belts, single type flat belts, etc.), V-belts (wrapped V-belts, low edge V-belts, etc.), V-ribbed belts (single V-ribbed belts, double V-ribbed belts, wrapped V-ribbed belt, rubber-backed V-ribbed belts, top cog V-ribbed belts, etc.), CVT use belts, timing belts, toothed belts, conveyor belts, and other various types of belts; fuel hoses, turbo air hoses, oil hoses, radiator hoses, heater hoses, water hoses, vacuum brake hoses, control hoses, air-conditioner hoses, brake hoses, power steering hoses, air hoses, marine hoses, risers, flow lines, and other various types of hoses; CVJ boots, propeller shaft boots, constant velocity joint boots, rack and pinion boots, and other various types of boots; cushion materials, dynamic dampers, rubber couplings, air springs, shock absorbers, and other attenuating member rubber parts; dust covers, automotive interior members, tires, covered cables, shoe soles, electromagnetic wave shields, binders for flexible printed circuits boards or other binders, fuel cell separators and also other broad applications in the electronics field.

### EXAMPLES

Below, the present invention will be explained based on more detailed examples, but the present invention is not limited to these examples. Note that, below, unless particularly indicated, "parts" are based on weight. The tests and evaluations were conducted as follows.

### Rubber Composition

The ratios of content of the monomer units forming the highly saturated nitrile rubber were measured in accordance with the following method.

The ratios of content of the 1,3-butadiene units and saturated butadiene units were calculated by using the highly saturated nitrile rubber to measure the iodine value (according to JIS K 6235) before the hydrogenation reaction and after the hydrogenation reaction.

The ratio of content of the acrylonitrile units was calculated in accordance with JIS K6384 by measuring the nitrogen content in the highly saturated nitrile rubber by the Kjeldahl method.

### Iodine Value

The iodine value of the highly saturated nitrile rubber was measured in accordance with JIS K 6235.

### Mooney Viscosity (Polymer Mooney)

The Mooney viscosity (polymer Mooney) of the highly saturated nitrile rubber was measured in accordance with JIS K6300-1 (units: (ML₁₊₄, 100°C)).

### Branching Index

The branching index of the highly saturated nitrile rubber was measured using a viscoelasticity measuring device: product name "RPA-2000, Rubber Process Analyzer", made by Alpha Technology).

Specifically, first, for the highly saturated nitrile rubber, the complex viscosity η* at 100°C, a frequency of 1 Hz, dynamic strain of 7.0%, and shear velocity of 0.44s⁻¹ was measured. This was made η1 (units: (Pa·s)). Next, the complex viscosity η* at 100°C, a frequency of 1 Hz, dynamic strain of 473.0%, and shear velocity of 29.7s⁻¹ was measured. This was made η2 (units: (Pa·s)). The branching index was found by (η2) - (η1) (units: (Pa·s)).

### Molecular Weight Distribution (Mw/Mn)

Highly saturated nitrile rubber was dissolved in chloroform, passed through a membrane filter, then measured by gel permeation chromatography under the following conditions to find the molecular weight distribution Mw/Mn of the highly saturated nitrile rubber. Note that, Mw and Mn are converted to standard polystyrene.
Measuring device: product name "HLC-8220" (made by Toso)
Column: Two columns of product name "GMH-HR-H" (made by Toso) and one column of product name "G3000H-HR" (made by Toso) connected in series.
Detector: differential refractometer RI
Eluent: chloroform
Column temperature: 40°C

### Scorch Stability (Mooney Scorch)_

The Mooney scorch time (t5) of the cross-linkable nitrile rubber composition was measured in accordance with JIS K6300 at 125°C. The larger the value of the Mooney scorch time (t5), the better the scorch stability.

### Normal Physical Properties (Tensile Strength, Elongation, 100% Tensile Stress)_

The cross-linkable nitrile rubber composition was placed on a vertical 15 cm, horizontal 15 cm, depth 0.2 cm mold and pressed by a press pressure of 10 MPa while being heated at 170°C for 20 minutes to press-form it and obtain a sheet-shaped cross-linked rubber. Next, the obtained cross-linked rubber was transferred to a gear type oven and secondarily cross-linked at 170°C for 4 hours. The obtained sheet-shaped cross-linked rubber was punched in the machine direction by a No. 3 dumbbell shape die to prepare a test piece. Then, the obtained test piece was used in accordance with JIS K6251 to measure the cross-linked rubber for tensile strength at break, 100% tensile stress, and elongation at break.

### Bending Fatigue Resistance (Bending Cracking Test)

The cross-linkable nitrile rubber composition was cross-linked in accordance with JIS K6260 at 170°C for 30 minutes to obtain cross-linked rubber for a De Mattia type bending fatigue test. Further, the obtained cross-linked rubber was measured using a De Mattia type bending fatigue tester (made by Ueshima Seisakusho) to find the number of times of bending fatigue operations at 25°C at the time of cracking. The larger the number of bending fatigue operations up to cracking, the better the bending fatigue resistance can be judged.

### Production Example 1 (Synthesis of Highly Saturated Nitrile Rubber (A1))

In a reactor, to 200 parts of ion exchanged water, 0.2 part of sodium carbonate was dissolved. To this, 2.25 parts of fatty acid potassium soap (potassium salt of fatty acid) were added to prepare a soap aqueous solution. Further, to this soap aqueous solution, 37 parts of acrylonitrile and 0.47 part of t-dodecyl mercaptan (molecular weight adjuster) were charged in this order. The inside gas was replaced with nitrogen three times, then 63 parts of 1,3-butadiene were charged. Next, the inside of the reactor was held at 5°C, 0.1 part of cumen hydroperoxide (polymerization initiator) and suitable quantities of a reducing agent and chelating agent were charged, and a polymerization reaction was performed at 16 hours while holding the temperature a 5°C. Next, 0.1 part of a concentration 10% hydroquinone (polymerization terminator) aqueous solution was added to stop the polymerization reaction and a water temperature 60°C rotary evaporator was used to remove the residual monomers to obtain a latex of nitrile rubber (solid content concentration about 25 wt%).

Next, the above obtained latex was added to aqueous solution of aluminum sulfate in an amount to give 3 wt% with respect to the nitrile rubber component. This was stirred to make the latex coagulate. The coagulated product was washed with water while separating it by filtration, then was dried in vacuo at 60°C for 12 hours to obtain a nitrile rubber. Further, the obtained nitrile rubber was dissolved in acetone to a concentration of 12%, then this solution was placed in an autoclave where a palladium-silica catalyst was added in an amount of 200 weight ppm with respect to the nitrile rubber, then the mixture was subjected to a hydrogenation reaction at a hydrogen pressure of 3.0 MPa. After the end of the hydrogenation reaction, the result was poured into a large amount of water to make it coagulate. The coagulated product was then separated by filtration and dried to obtain the pre-high shear treatment highly saturated nitrile rubber (a1).

Next, a twin-screw extruder (one configured by eight barrels joined together) was used to add 1 part of poly(2,2,4-trimethyl-1,2- dihydroquinoline) (product name "Nocrac 224", made by Ouchi Shinko Chemical Industrial, hydroquinone-based antiaging agent) with respect to 100 parts of the above obtained pre-high shear treatment highly saturated nitrile rubber (a1) and treat the mixture to impair a high shear force under the following conditions.

### <Twin-Screw Extruder>

Twin-screw extruder: product name "KZW15TW-60MG" (made by Technovel)
Cylinder inside diameter: 15 mm
Screw length: 900 mm
Groove depth of feed screw part: 2.75 mm
Tip clearance (distance between cylinder inside wall and screw tip): 0.2 mm
L/D:60
Barrel configuration: 8-barrel configuration
Screw configuration: the number of kneading pars in kneading and shearing zone is three
Screw speed: 400 rpm
Processing speed: 2 kg/hr
Structure of screws: complete meshing type double flight screws where the screws rotate in the same direction
Dwell time: 180 to 230 sec

### <Temperature Settings>

Barrel 1 (charging zone): 100°C
Barrel 2 (melting zone): 270°C
Barrels 3 to 6 (kneading and shearing zone): 270 to 300°C
Barrels 7 to 8 (cooling and degassing zone): 200 to 270°C

The composition of the obtained highly saturated nitrile rubber (A1) after treatment to impart a high shear force was acrylonitrile units: 36.1 wt% and 1,3-butadiene units (including hydrogenated part): 63.9 wt%, the iodine value was 25, the polymer Mooney viscosity (ML₁₊₄, 100°C) was 28, the branching index was 9310 Pa·s, and the Mw/Mn was 3.11.

### Production Example 2 (Synthesis of Highly Saturated Nitrile Rubber (A2))

Except for changing the amount of use of acrylonitrile from 37 parts to 41 parts and changing the amount of use of 1,3-butadiene from 63 parts to 59 parts and furthermore changing the amount of palladium-silica catalyst used for the hydrogenation reaction from 200 weight ppm to 500 weight ppm, the same procedure was followed as in Production Example 1 to obtain a pre-high shear treatment highly saturated nitrile rubber (a2).

Further, using a twin-screw extruder similar to Production Example 1 (comprised of eight barrels joined together) to add 1 part of poly(2,2,4-trimethyl-1,2-dihydroquinoline) (product name "Nocrac 224", made by Ouchi Shinko Chemical Industrial, amine-ketone antiaging agent) with respect to 100 parts of the above obtained pre-high shear treatment highly saturated nitrile rubber (a2) as in Production Example 1, the same procedure was followed as in Production Example 1 to treat the materials to impart a high shear force and thereby obtain a highly saturated nitrile rubber (A2).

The composition of the obtained highly saturated nitrile rubber (A2) after treatment to impart a high shear force was acrylonitrile units: 40.0 wt% and 1,3-butadiene units (including hydrogenated part): 60.0 wt%, the iodine value was 6, the polymer Mooney viscosity (ML₁₊₄, 100°C) was 27, the branching index was 9615 Pa·s, and the Mw/Mn was 2.29.

### Production Example 3 (Synthesis of Highly Saturated Nitrile Rubber (A3))

Except for changing the amount of use of the t-dodecyl mercaptan (molecular weight adjuster) from 0.47 part to 0.35 part, the same procedure was followed as in Production Example 1 to obtain a pre-high shear treatment highly saturated nitrile rubber (a3).

Further, using a twin-screw extruder similar to Production Example 1 (comprised of eight barrels joined together) to add 1 part of poly(2,2,4-trimethyl-1,2-dihydroquinoline) (product name "Nocrac 224", made by Ouchi Shinko Chemical Industrial, amine-ketone antiaging agent) with respect to 100 parts of the above obtained pre-high shear treatment highly saturated nitrile rubber (a3) as in Production Example 1 and except for changing the screw speed from 400 rpm to 200 rpm, the same procedure was followed as in Production Example 1 to treat the materials to impart high shear force and thereby obtain a highly saturated nitrile rubber (A3).

The composition of the obtained highly saturated nitrile rubber (A3) after treatment to impart a high shear force was acrylonitrile units: 36.0 wt% and 1,3-butadiene units (including hydrogenated part): 64.0 wt%, the iodine value was 26, the polymer Mooney viscosity (ML₁₊₄, 100°C) was 35, the branching index was 10210 Pa·s, and the Mw/Mn was 4.1.

### Production Example 4 (Synthesis of Highly Saturated Nitrile Rubber (A4))

Except for changing the amount of use of acrylonitrile from 37 parts to 36 parts, changing the amount of use of 1,3-butadiene from 63 parts to 60 parts, and changing the amount of use of t-dodecyl mercaptan (molecular weight adjuster) from 0.47 part to 0.55 part, the same procedure was followed as in Production Example 1 to obtain a pre-high shear treatment highly saturated nitrile rubber (a4).

Further, using a twin-screw extruder similar to Production Example 1 (comprised of eight barrels joined together) to add 1 part of poly(2,2,4-trimethyl-1,2- dihydroquinoline) (product name "Nocrac 224", made by Ouchi Shinko Chemical Industrial, amine-ketone antiaging agent) with respect to 100 parts of the above obtained pre-high shear treatment highly saturated nitrile rubber (a4) as in Production Example 1 and except for changing the processing speed from 2 kg/hr to 1 kg/hr, the same procedure was followed as in Production Example 1 to treat the material to impart a high shear force to thereby obtain a highly saturated nitrile rubber (A4).

The composition of the obtained highly saturated nitrile rubber (A4) after treatment to impart a high shear force was acrylonitrile units: 35.5 wt% and 1,3-butadiene units (including hydrogenated part): 64.5 wt%, the iodine value was 35, the polymer Mooney viscosity (ML₁₊₄, 100°C) was 20, the branching index was 15630 Pa·s, and the Mw/Mn was 5.0.

### Production Example 5 (Synthesis of Highly Saturated Nitrile Rubber (A5))

Except for changing the amount of use of acrylonitrile from 37 parts to 34 parts, changing the amount of use of 1,3-butadiene from 63 parts to 66 parts, changing the amount of use of t-dodecyl mercaptan (molecular weight adjuster) from 0.47 part to 0.39 part, and changing the reaction temperature at the time of the polymerization reaction from 5°C to 10°C, and, furthermore, changing the amount of the palladium-silica catalyst used for the hydrogenation reaction from 200 weight ppm to 400 weight ppm, the same procedure was followed as in Production Example 1 to obtain a pre-high shear treatment highly saturated nitrile rubber (a5).

Further, using a twin-screw extruder similar to Production Example 1 (comprised of eight barrels joined together) to add 1 part of poly(2,2,4-trimethyl-1,2-dihydroquinoline) (product name "Nocrac 224", made by Ouchi Shinko Chemical Industrial, amine-ketone antiaging agent) with respect to 100 parts of the above obtained pre-high shear treatment highly saturated nitrile rubber (a5) as in Production Example 1, the same procedure was followed as in Production Example 1 to treat the material to impart a high shear force to thereby obtain a highly saturated nitrile rubber (A5).

The composition of the obtained highly saturated nitrile rubber (A5) after treatment imparting a high shear force was acrylonitrile units: 33.0 wt% and 1,3-butadiene units (including hydrogenated part): 67.0 wt%, the iodine value was 11, the polymer Mooney viscosity (ML₁₊₄, 100°C) was 43, the branching index was 9560 Pa·s, and the Mw/Mn was 2.9.

### Production Example 6 (Synthesis of Highly Saturated Nitrile Rubber (A6))

Except for changing the amount of use of acrylonitrile from 37 parts to 44 parts, changing the amount of use of 1,3-butadiene from 63 parts to 56 parts, changing the amount of use of t-dodecyl mercaptan (molecular weight adjuster) from 0.47 part to 0.45 part, and changing the amount of the palladium-silica catalyst used for the hydrogenation reaction from 200 weight ppm to 400 weight ppm, the same procedure was followed as in Production Example 1 to obtain a pre-high shear treatment highly saturated nitrile rubber (a6).

Further, using a twin-screw extruder similar to Production Example 1 (comprised of eight barrels joined together) to add 1 part of poly(2,2,4-trimethyl-1,2-dihydroquinoline) (product name "Nocrac 224", made by Ouchi Shinko Chemical Industrial, amine-ketone antiaging agent) with respect to 100 parts of the above obtained pre-high shear treatment highly saturated nitrile rubber (a6) as in Production Example 1, except for changing the screw speed from 400 rpm to 300 rpm, and except for changing the processing speed from 2 kg/hr to 1 kg/hr, the same procedure was followed as in Production Example 1 to treat the material to impart a high shear force to thereby obtain a highly saturated nitrile rubber (A6).

The composition of the obtained highly saturated nitrile rubber (A6) after treatment imparting a high shear force was acrylonitrile units: 43.0 wt% and 1,3-butadiene units (including hydrogenated part): 57.0 wt%, the iodine value was 18, the polymer Mooney viscosity (ML₁₊₄, 100°C) was 33, the branching index was 16200 Pa·s, and the Mw/Mn was 5.5.

### Production Example 7 (Synthesis of Highly Saturated Nitrile Rubber (B1))

Except for changing the amount of use of t-dodecyl mercaptan (molecular weight adjuster) from 0.47 part to 0.50 part and not performing the high shear force imparting treatment using a twin-screw extruder, the same procedure was followed as in Production Example 1 to obtain a highly saturated nitrile rubber (B1).

The composition of the obtained highly saturated nitrile rubber (B1) was acrylonitrile units: 36.0 wt% and 1,3-butadiene units (including hydrogenated part): 64.0 wt%, the iodine value was 29, the polymer Mooney viscosity (ML₁₊₄, 100°C) was 60, the branching index was 23549 Pa·s, and the Mw/Mn was 2.84.

### Production Example 8 (Synthesis of Highly Saturated Nitrile Rubber (B2))

Except for changing the amount of use of t-dodecyl mercaptan (molecular weight adjuster) from 0.47 part to 0.48 part and not performing the high shear force imparting treatment using a twin-screw extruder, the same procedure was followed as in Production Example 1 to obtain a highly saturated nitrile rubber (B2).

The composition of the obtained highly saturated nitrile rubber (B2) was acrylonitrile units: 36.3 wt% and 1,3-butadiene units (including hydrogenated part): 63.7 wt%, the iodine value was 28, the polymer Mooney viscosity (ML₁₊₄, 100°C) was 75, the branching index was 28780 Pa·s, and the Mw/Mn was 2.72.

### Example 1

Using a Bambury mixer, 100 parts of the highly saturated nitrile rubber (A1) obtained in Production Example 1, 15 parts of SRF carbon black (product name "Seast S", made by Tokai Carbon, carbon black), 5 parts of silica (product name "Nipsil VN-3", made by Toso Silica, silica), 5 parts of zinc methacrylate (one with ratio of content of particles with a volume average particle size of 20 um or more of 5% or less)], 1.5 parts of (4,4'-di-(α,α-dimethylbenzyl)diphenylamine (product name "Nocrac CD", made by Ouchi Shinko Chemical Industrial, antiaging agent), 1.5 parts of 2-mercaptobenzoimidazole zinc salt (product name "Nocrac MBZ", made by Ouchi Shinko Chemical Industrial, antiaging agent), 5 parts of tri-2-ethylhexyl trimellitate (product name "Adekasizer C-8", made by Adeka, plasticizer), and 1 part of stearic acid were kneaded at a chamber setting at 50°C for 5 minutes. Next, the mixture was transferred to open rolls and 5 parts of 1,3-bis(t-butylperoxyisopropyl)benzene (product name "Peroxymon F-40", made by NOF, organic peroxide cross-linking agent) was mixed in and the result was kneaded at 50°C for 10 minutes to obtain a cross-linkable nitrile rubber composition.

Further, the obtained cross-linkable nitrile rubber composition was used in accordance with the above-mentioned methods to conduct tests and evaluations of the scorch stability, normal physical properties, and bending fatigue resistance. The results are shown in Table 1.

### Example 2

Except for using, instead of 100 parts of the highly saturated nitrile rubber (A1) obtained in Production Example 1, 100 parts of the highly saturated nitrile rubber (A2) obtained in Production Example 2, the same procedure was followed as in Example 1 to prepare a cross-linkable nitrile rubber composition and the same procedure was followed to evaluate it. The results are shown in Table 1.

### Example 3

Except for changing the amount of the SRF carbon black from 15 parts to 2 parts and changing the amount of the zinc methacrylate from 15 parts to 25 parts, the same procedure was followed as in Example 1 to prepare a cross-linkable nitrile rubber composition and the same procedure was followed to evaluate it. The results are shown in Table 1.

### Example 4

Except for using, instead of 100 parts of the highly saturated nitrile rubber (A1) obtained in Production Example 1, 100 parts of the highly saturated nitrile rubber (A3) obtained in Production Example 3, the same procedure was followed as in Example 1 to prepare a cross-linkable nitrile rubber composition and the same procedure was followed to evaluate it. The results are shown in Table 1.

### Example 5

Except for using, instead of 100 parts of the highly saturated nitrile rubber (A1) obtained in Production Example 1, 100 parts of the highly saturated nitrile rubber (A4) obtained in Production Example 4, the same procedure was followed as in Example 1 to prepare a cross-linkable nitrile rubber composition and the same procedure was followed to evaluate it. The results are shown in Table 1.

### Example 6

Except for using, instead of 100 parts of the highly saturated nitrile rubber (A1) obtained in Production Example 1, 100 parts of the highly saturated nitrile rubber (A5) obtained in Production Example 5, the same procedure was followed as in Example 1 to prepare a cross-linkable nitrile rubber composition and the same procedure was followed to evaluate it. The results are shown in Table 1.

### Example 7

Except for using, instead of 100 parts of the highly saturated nitrile rubber (A1) obtained in Production Example 1, 100 parts of the highly saturated nitrile rubber (A6) obtained in Production Example 6, the same procedure was followed as in Example 1 to prepare a cross-linkable nitrile rubber composition and the same procedure was followed to evaluate it. The results are shown in Table 1.

### Comparative Example 1

Except for using, instead of 100 parts of the highly saturated nitrile rubber (A1) obtained in Production Example 1, 100 parts of the highly saturated nitrile rubber (B1) obtained in Production Example 7, the same procedure was followed as in Example 1 to prepare a cross-linkable nitrile rubber composition and the same procedure was followed to evaluate it. The results are shown in Table 1.

### Comparative Example 2

Except for using, instead of 100 parts of the highly saturated nitrile rubber (A1) obtained in Production Example 1, 100 parts of the highly saturated nitrile rubber (B2) obtained in Production Example 8, the same procedure was followed as in Example 1 to prepare a cross-linkable nitrile rubber composition and the same procedure was followed to evaluate it. The results are shown in Table 1.

### Comparative Example 3

Except for changing the amount of the SRF carbon black from 15 parts to 55 parts and not mixing in zinc methacrylate, the same procedure was followed as in Example 1 to prepare a cross-linkable nitrile rubber composition and the same procedure was followed to evaluate it. The results are shown in Table 1.

### Table 1

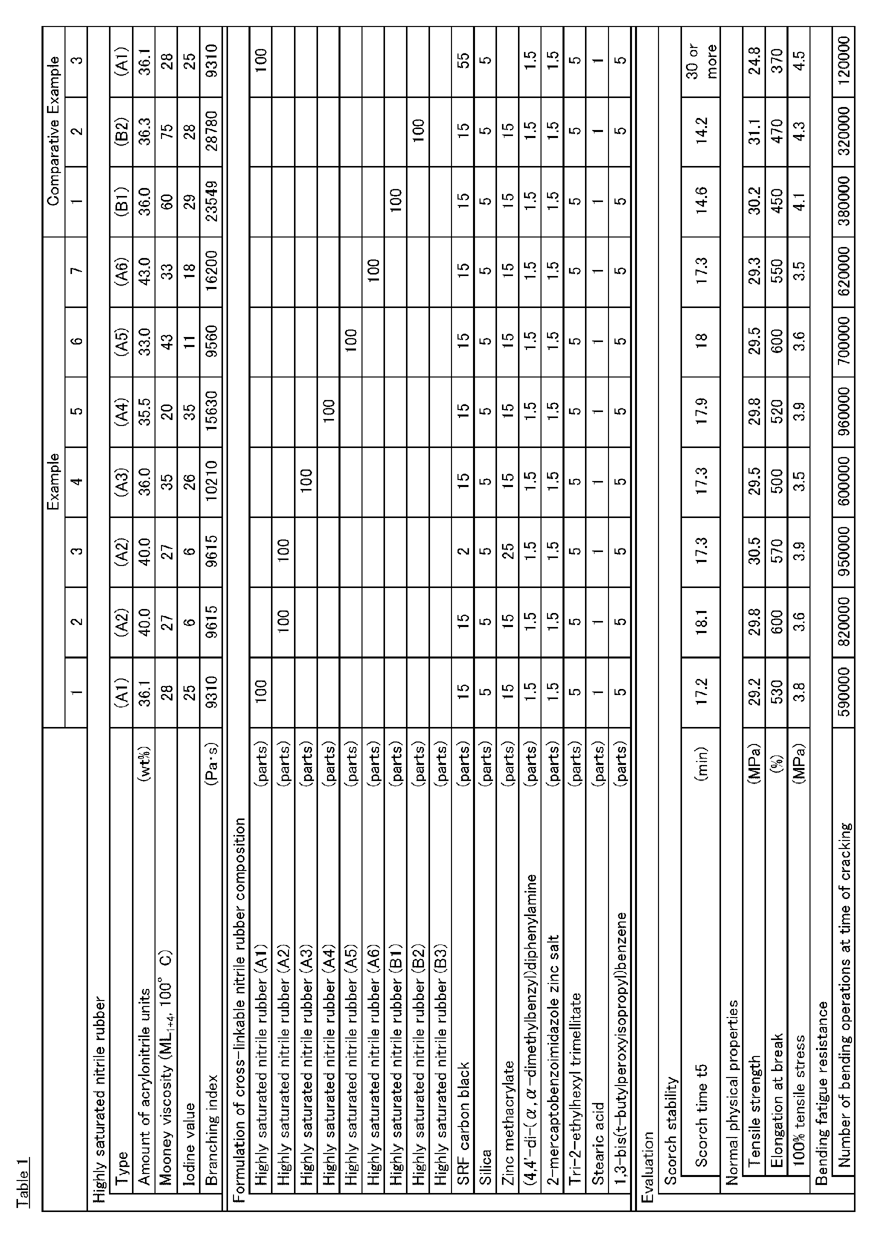

As shown in Table 1, a cross-linkable nitrile rubber composition containing the highly saturated nitrile rubber (A), unsaturated carboxylic acid metal salt (B), and organic peroxide cross-linking agent (C) predetermined in the present invention was excellent in scorch stability. Furthermore, the cross-linked rubber obtained using that rubber composition was excellent in normal physical properties and bending fatigue resistance (Examples 1 to 7).

On the other hand, when using highly saturated nitrile rubber with a Mooney viscosity larger than 50, the scorch time was short and the scorch stability was poor. Furthermore, the obtained cross-linked rubber was inferior in bending fatigue resistance (Comparative Examples 1 to 2).

Further, when not mixing in the unsaturated carboxylic acid metal salt (B), the obtained cross-linked rubber was low in tensile strength and poor in bending fatigue resistance (Comparative Example 3).

## Claims

1. A cross-linkable nitrile rubber composition comprising
a highly saturated nitrile rubber (A) with a Mooney viscosity (ML₁₊₄, 100°C) of 10 to 45 and an iodine value of 120 or less,
an unsaturated carboxylic acid metal salt (B), and
an organic peroxide cross-linking agent (C), wherein the highly saturated nitrile rubber (A) has a branching index η2-η1 of 20,000 Pa·s or less,
the highly saturated nitrile rubber (A) has a molecular weight distribution (Mw/Mn) of 1.8 to 10,
the highly saturated nitrile rubber (A) is produced by performing a high shear treatment in the presence of an antiaging agent,
the amount of a rubber other than the highly saturated nitrile rubber (A) in the cross-linkable nitrile rubber composition is 10 parts by weight or less with respect to 100 parts by weight of the highly saturated nitrile rubber (A),
the Mooney viscosity (ML₁₊₄, 100°C) is measured in accordance with JIS K6300-1,
the iodine value is measured in accordance with JIS K 6235,
the branching index is measured using a complex viscosity η₁ which is measured using a viscoelasticity measuring device at 100°C, a frequency of 1 Hz, dynamic strain of 7.0%, and shear velocity of 0.44 s⁻¹, and a complex viscosity η₂ which is measured using a viscoelasticity measuring device at 100°C, a frequency of 1 Hz, dynamic strain of 473.0%, and shear velocity of 29.7 s⁻¹, and
the molecular weight distribution (Mw/Mn) is calculated using Mw and Mn which are measured by gel permeation chromatography as values converted to standard polystyrene.

2. The cross-linkable nitrile rubber composition according to claim 1, wherein the unsaturated carboxylic acid metal salt (B) is a zinc salt of an unsaturated carboxylic acid.

3. The cross-linkable nitrile rubber composition according to claim 1 or 2, wherein the unsaturated carboxylic acid metal salt (B) is a zinc salt of an unsaturated monocarboxylic acid.

4. The cross-linkable nitrile rubber composition according to any one of claims 1 to 3, wherein the unsaturated carboxylic acid metal salt (B) has a ratio of content of particles with a volume average particle size of 20 um or more of 5% or less.

5. A cross-linked rubber obtained by cross-linking the cross-linkable nitrile rubber composition according to any of claims 1 to 4.

## Patentansprüche

1. Vernetzbare Nitrilkautschukzusammensetzung, umfassend
einen hochgesättigten Nitrilkautschuk (A) mit einer Mooney-Viskosität (ML₁₊₄, 100°C) von 10 bis 45 und einer Iodzahl von 120 oder weniger,
ein Metallsalz einer ungesättigten Carbonsäure (B), und
ein organisches Peroxid als Vernetzungsmittel (C), wobei
der hochgesättigte Nitrilkautschuk (A) einen Verzweigungsindex η2-η1 von 20.000 Pa·s oder weniger aufweist,
der hochgesättigte Nitrilkautschuk (A) eine Molekulargewichtsverteilung (Mw/Mn) von 1,8 bis 10 aufweist,
der hochgesättigte Nitrilkautschuk (A) durch eine Behandlung mit hoher Scherung in Gegenwart eines Alterungsschutzmittels hergestellt ist,
die Menge eines anderen Kautschuks als des hochgesättigten Nitrilkautschuks (A) in der vernetzbaren Nitrilkautschukzusammensetzung 10 Gewichtsteile oder weniger, bezogen auf 100 Gewichtsteile des hochgesättigten Nitrilkautschuks (A), beträgt,
die Mooney-Viskosität (ML₁₊₄, 100°C) gemäß JIS K6300-1 gemessen wird,
die Iodzahl nach JIS K 6235 gemessen wird,
der Verzweigungsindex gemessen wird unter Verwendung einer komplexen Viskosität η₁, die mit einem Viskoelastizitätsmessgerät bei 100 °C, einer Frequenz von 1 Hz, einer dynamischen Dehnung von 7,0 % und einer Schergeschwindigkeit von 0,44 s⁻¹ gemessen wird, und einer komplexen Viskosität η₂, die mit einem Viskoelastizitätsmessgerät bei 100 °C, einer Frequenz von 1 Hz, einer dynamischen Dehnung von 473,0 % und einer Schergeschwindigkeit von 29,7 s⁻¹ gemessen wird, und
die Molekulargewichtsverteilung (Mw/Mn) unter Verwendung von Mw und Mn berechnet wird, die durch Gelpermeationschromatographie als auf Standardpolystyrol umgerechnete Werte gemessen werden.

2. Vernetzbare Nitrilkautschukzusammensetzung nach Anspruch 1, wobei das Metallsalz der ungesättigten Carbonsäure (B) ein Zinksalz einer ungesättigten Carbonsäure ist.

3. Vernetzbare Nitrilkautschukzusammensetzung nach Anspruch 1 oder 2, wobei das Metallsalz der ungesättigten Carbonsäure (B) ein Zinksalz einer ungesättigten Monocarbonsäure ist.

4. Vernetzbare Nitrilkautschukzusammensetzung nach einem der Ansprüche 1 bis 3, wobei das Metallsalz der ungesättigten Carbonsäure (B) einen Anteil an Teilchen mit einer volumengemittelten Teilchengröße von 20 µm oder mehr von 5 % oder weniger aufweist.

5. Vernetzter Kautschuk, erhalten durch Vernetzen der vernetzbaren Nitrilkautschukzusammensetzung nach einem der Ansprüche 1 bis 4.

## Revendications

1. Composition de caoutchouc nitrile réticulable comprenant
un caoutchouc nitrile hautement saturé (A) ayant une viscosité Mooney (ML₁₊₄, 100°C) comprise entre 10 et 45 et un indice d'iode inférieur ou égal à 120,
un sel métallique d'acide carboxylique insaturé (B), et
un agent de réticulation au peroxyde organique (C), dans laquelle
le caoutchouc nitrile hautement saturé (A) a un indice de ramification η2-η1 de 20 000 Pa·s ou moins,
le caoutchouc nitrile hautement saturé (A) a une distribution de poids moléculaire (Mw/Mn) de 1,8 à 10,
le caoutchouc nitrile hautement saturé (A) est produit par un traitement de cisaillement élevé en présence d'un agent antivieillissement,
la quantité d'un caoutchouc autre que le caoutchouc nitrile hautement saturé (A) dans la composition de caoutchouc nitrile réticulable est de 10 parties en poids ou moins par rapport à 100 parties en poids du caoutchouc nitrile hautement saturé (A),
la viscosité Mooney (ML₁₊₄, 100°C) est mesurée conformément à la norme JIS K6300-1,
l'indice d'iode est mesuré conformément à la norme JIS K 6235,
l'indice de ramification est mesuré à l'aide d'une viscosité complexe η₁ qui est mesurée à l'aide d'un dispositif de mesure de la viscoélasticité à 100°C, à une fréquence de 1 Hz, à une déformation dynamique de 7,0 % et à une vitesse de cisaillement de 0,44 s⁻¹, et d'une viscosité complexe η₂ qui est mesurée à l'aide d'un dispositif de mesure de la viscoélasticité à 100°C, à une fréquence de 1 Hz, à une déformation dynamique de 473,0 % et à une vitesse de cisaillement de 29,7 s⁻¹, et
la distribution du poids moléculaire (Mw/Mn) est calculée en utilisant Mw et Mn qui sont mesurés par chromatographie par perméation de gel en tant que valeurs converties en polystyrène standard.

2. Composition de caoutchouc nitrile réticulable selon la revendication 1, dans laquelle le sel métallique d'acide carboxylique insaturé (B) est un sel de zinc d'un acide carboxylique insaturé.

3. Composition de caoutchouc nitrile réticulable selon la revendication 1 ou 2, dans laquelle le sel métallique d'acide carboxylique insaturé (B) est un sel de zinc d'un acide monocarboxylique insaturé.

4. Composition de caoutchouc nitrile réticulable selon l'une quelconque des revendications 1 à 3, dans laquelle le sel métallique d'acide carboxylique insaturé (B) présente un rapport de teneur en particules ayant une taille moyenne en volume de 20 um ou plus de 5 % ou moins.

5. Caoutchouc réticulé obtenu par réticulation de la composition de caoutchouc nitrile réticulable selon l'une quelconque des revendications 1 à 4.
